(19) Europäisches Patentamt
European Patent Office
Office européen des brevets

(11) **EP 3 196 523 B1**

(12) **EUROPEAN PATENT SPECIFICATION**

(45) Date of publication and mention
of the grant of the patent:
**19.12.2018 Bulletin 2018/51**

(51) Int Cl.:
***F16L 11/08*** *(2006.01)*     ***G01B 11/00*** *(2006.01)*

(21) Application number: **15782072.1**

(86) International application number:
**PCT/IB2015/057100**

(22) Date of filing: **15.09.2015**

(87) International publication number:
**WO 2016/042487 (24.03.2016 Gazette 2016/12)**

(54) **METHOD FOR CALIBRATING FLEXIBLE PIPING**

MÉTODO DE CALIBRAÇÃO PARA UMA TUBULAÇÃO FLEXÍVEL

PROCÉDÉ D'ÉTALONNAGE POUR TUBULURE SOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2014 BR 102014023265**

(43) Date of publication of application:
**26.07.2017 Bulletin 2017/30**

(73) Proprietor: **Technip France
92400 Courbevoie (FR)**

(72) Inventors:
• **LIMA, Lucas Antonio Cunha
22230-001 Rio de Janeiro, RJ (BR)**

• **DA SILVA, Alex Oliveira Saint Clair
22765-003 Rio de Janeiro, RJ (BR)**
• **ARRUDA, Fabio Rogerio
22775-033 Rio de Janeiro, RJ (BR)**

(74) Representative: **Lavoix
2, place d'Estienne d'Orves
75441 Paris Cedex 09 (FR)**

(56) References cited:
**EP-A2- 2 489 824     US-A1- 2006 233 482
US-A1- 2009 287 092**

**Description**

FIELD OF THE INVENTION

The invention, in general, refers to flexible pipelines used to explore and produce oil and gas and, more specifically, the invention relates to a calibration method for monitoring these flexible pipelines, according to the preamble of claim 1.

BACKGROUND OF THE INVENTION

The exploration and production of oil and gas extracted from the seabed in offshore platforms usually involve flexible pipelines, also referred to as flexible risers, to carry out the fluid communication between both the oil and gas production well and the platform, which can include a watercraft and which stores the withdrawn hydrocarbons for subsequent transport to the coast.

In the instant specification the terms "flexible pipeline", "flexible conductor", "flexible riser" and "riser" are used interchangeably, unless otherwise defined, and refer to suitable flexible pipelines in particular for the transportation of hydrocarbons both in their liquid and gas state as well as in a mixture of these associated or not with other fluids, and more in particular, for the transportation of hydrocarbons withdrawn from the ocean floor, especially at great depths. Furthermore, according to the invention the flexible pipeline is an unbonded flexible pipeline consisting of a set of several superimposed layers, which is called "unbonded" because the layers can move, at least partially, with respect to each other. In general, these flexible pipelines are built according to the recommendations of the API 17J standard, published by the American Petroleum Institute.

A flexible pipeline for hydrocarbon transportation as the one specified above typically presents a structure which comprises the following, going from the inside to the outside of the conductor:

- a metal housing which is in direct contact with the conveyed fluid and whose main function is that of providing resistance to hydrostatic collapse and resistance to radial mechanical compression. These housings usually consists of stainless steel bands comprising a helical shape and/or an "S" shape interlocked with each other at a relatively small pitch. The expression "relatively small pitch" means that the absolute value of the helix angle is comprised between 70° and 90°;
- an internal pressure polymeric layer whose purpose is that of ensuring internal tightness of the inner duct line, since the metal housing is waterproof;
- a pressure armor which generally presents "Z"-, "C"- or "T"- shaped metal sections interlocked with each other and helicoidally-arranged at a relatively small pitch, defined by a helix angle from 70° to 90°. The pressure armor aims at supporting the inner polymeric layer and provide mechanical resistance in the radial direction in relation to both internal pressure and hydrostatic collapse. Flexible pipelines can present more than a pressure armor layer;

- traction armor which consists of one or more layers of metallic wires arranged helically and aims to support the traction of the flexible pipeline. The wires are coiled at a relatively large pitch, usually ranging between 0 and 60°, preferably between 20° and 55°. Flexible pipelines usually comprise two traction armor layers winded at opposite angles, but can present up to four traction armor layers to support the axial forces present in the duct. Such arrangement of wire winding at opposite angles allows a better balancing of the torque to which the structure is submitted so that the pipeline does not rotate around its longitudinal axis when a tensil load is applied; and
- external polymeric layer: which protects the metallic wires from the external environment.

If need be, flexible pipelines can present other layers, such as intermediate layer, to ensure mechanical resistance in the radial direction of the traction armors, thermal insulating layer, etc. The structure of a flexible pipeline is known in the state of the art, thus, there is no need for more detailed explanations in the instant specification.

Due to the discovery of significant oil and gas reserves at great depths, these flexible pipelines have been working in increasingly harsh conditions both in terms of loads applied to the pipeline (due to greater depth, longer pipeline length, larger water mass, higher stress and subjection to fatigue) and in terms of detrimental environment (due to the high concentrations of gasses, mainly $CO_2$ and $H_2S$, which are commonly found in very deep hydrocarbon reserves).

Accordingly, flexible pipelines must withstand great depths, typically 2500 meters of depth or more, they must allow the conveyance of hydrocarbons with high concentration of harmful gasses and with a temperature which typically attains 130°C at an internal pressure of 1000 bars or even 1500 bars.

Therefore, an effective and constant monitoring of these flexible pipelines is required, since a failure can cause an environmental disaster.

A topside end fitting of the flexible pipeline secures the pipeline to the platform. Since one side of the flexible pipeline is secured to the platform while the other side is subject to movement throughout its length due to the oscillation of the waves and to the strength of ocean currents, there is a concern with monitoring the risk of failure by traction, pressure, torque, or combination thereof. Another concern relates to ruptures that may occur caused by cyclic fatigue.

In order to provide a solution for monitoring a flexible pipe in the region of the top connection, document EP 2 489 824 proposes a top connection comprising fastening and sealing means of the flexible pipe and having an inspection window, which allows a visual monitoring of the conditions of the flexible pipe, particularly of the armors of the tractioning armors.

Although this prior art document introduces a useful solution it is not satisfactory since the visual inspection is subject to human error and is not constant, that is, it may happen that the pipeline is not being inspected at the time a failure occurs.

With the aim of providing a more effective solution, document BR PI0801011-0 suggests the use of sensors such as optical and resistive extensometer sensors mounted on the traction armor wires, wherein these sensors are used to monitor variations in the wire deformation which can indicate failure or fatigue and potential damages. Although this solution is more effective as it allows a constant and more precise monitoring of the flexible pipeline in the topside end fitting it still has limitations since sensors can crash during installation, and a wrong reading of a defective sensor or of one that is not properly fastened to the wires can lead to a false interpretation of a problem that actually does not exist.

Accordingly, the paper New Advances In Flexible Riser Monitoring Techniques Using Optical Fiber Sensors by Morikawa et al., presented at the XXXI International Conference on Ocean Offshore and Arctic Engineering, 1-6 July, 2012, discusses the use of optical sensors, in particular Fiber Bragg Grating (FBG) sensors to detect ruptures of the traction armor wire, as well as to monitor the progression of such potential failure. However, the solution suggested in this publication also incurs in the same problems mentioned above, that is, the possibility of a misread of inexistent faults due to improperly-mounted sensors or to faulty sensors.

The invention aims to bypass these drawbacks found in the prior art, among others.

## DESCRIPTION OF THE INVENTION

Thus, the first objective of the invention is that of providing a calibration method to monitor a flexible pipeline which can identify sensor failures.

A further objective of the invention is that of providing a calibration method to monitor a flexible pipeline which prevents or even removes misreading due to improperly-mounted sensors or to faulty sensors.

The aforementioned objectives, among others, are achieved through the invention which consists of a calibration method according to claim 1.

In conformity with additional and/or alternative features of the invention, the features of claims 2 to 14, alone or in technically possible combinations, can also be present.

## BRIEF DESCRIPTION OF THE DRAWINGS

The invention is described below with regards to its particular embodiments, making reference to the attached figures. These figures are schematic and their sizes and proportions may not correspond to reality since they only aim at describing the invention in a didactic way and do not impose any limitations besides those defined by the claims described below. Some technical features may have been emitted from the figures to make them clearer and easier to understand, wherein:

- Figure 1 represents a schematic sectional side view of a flexible pipeline mounted on a topside fitting;
- Figure 2 schematically represents a first step of the method according to one of the embodiment of the invention;
- Figure 3 schematically represents the other steps of the method according to one of the embodiment of the invention; and
- Figure 4 is a graph representing the readings which can be obtained by the calibration process of the invention.

## DESCRIPTION OF THE EMBODIMENTS OF THE INVENTION

The invention is herein described with regard to its particular embodiments, making also reference to the attached figures. Particular embodiments are described in details and shown in the figures, and they should be considered an exemplifications of the principles of the invention, without limiting the invention to what is illustrated and described in the instant specification. Let us note that the different teachings of the embodiments discussed below can be used separately or in any suitable combination to produce the same technical effects. The reference numbers are repeated along for same technical features throughout the figures.

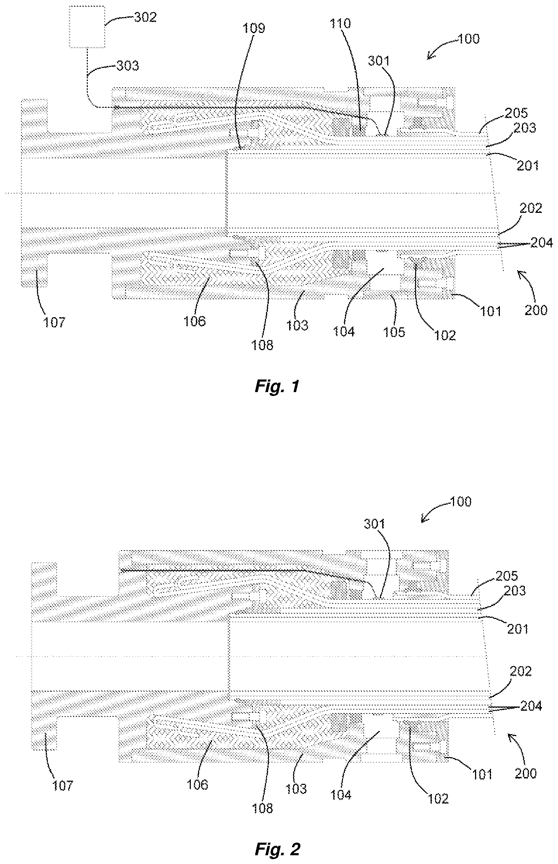

Figure 1 discloses a flexible pipeline (200) mounted and fastened on/to a topside fitting (100). As represented in this figure, the flexible pipeline comprises one internal metal housing (201), a polymeric internal pressure layer (202), a pressure armor (203), a traction armor (204) that in this representation presents two layers of metallic wires helicoidally-mounted with opposite helix angles, and an external polymeric layer (205).

Moreover, figure 1 also represents an example of fastening of a topside fitting (100) intended to fasten the flexible pipeline (200) to the production platform. Accordingly, the topside fitting (100) can present mechanical construction elements suitable to fasten a flexible pipeline and, as shown in figure 1, such elements can consist of a lower cover (101) associated with sealing and pressing means (102) of the external polymeric layer (205), an external housing (103) which comprises an inspection window (104) consisting of an opening which can comprise a transparent protection (105) allowing a visual inspection of the metallic wires of the traction armor (204) which, in turn, are usually fastened to the topside fitting by means of a high resistance resin (106), such as epoxy resin, in a chamber formed between the external housing (103) of the topside fitting and the external flange (107). The other layers of the flexible pipeline, such as the metal housing (201), the polymeric internal pressure layer (202) and the pressure armor (203) can be fastened to an intermediate flange (108) which, in turn, is fastened to the external flange (107). One or more sealing elements (109, 110) also can be provided in the topside fitting (100), and other fastening elements commonly used, such as screws, nuts, etc. are generically represented and do not require more details since they are commonly known mechanical construction elements .

A similar embodiment of a topside fitting (100) of a flexible pipeline as described herein and comprising an inspection window (104) is know, for example, in the aforementioned document EP 2 489 824.

One or more sensors (301) are mounted on the traction armor wires (204) and connected to a reader (302) that allows to perform a reading of the variables measured by the sensors, which can consist of magnetic sensors, optical extensometer sensors (Fiber Bragg Grating) or resistive sensors (Strain Gauge), etc. The reader (302) can consist of, for instance, a computer associated with a suitable software to perform the reading of the variables measured by the sensors. The use of sensors to perform measures in the traction armor wires is described, for example, in document BR PI0801011-0 and in the paper *New Advances In Flexible Riser Monitoring Techniques Using Optical Fiber Sensors*, as already discussed above.

However, and as already discussed, such sensors can be fastened improperly on the strain armor wires or even fail, which can lead to a misreading of the strain in the traction armor wires and thus to a misinterpretation of data concerning problems with the traction armor. Thus, it is necessary to provide an efficient method to calibrate these sensors, so as to ensure a correct reading and interpretation of data which will be collected when the flexible pipeline is in operation mode.

Therefore, as shown in figure 2, the first step of the method of the invention suggests the assembly or fastening of at least one sensor in/to at least one strain armor wire and, preferably, the fastening of at least one sensor to each of the wires forming the strain armor. The assembly or fastening of the sensor in/to the strain armor wire can be performed through conventional means. If an optical extensometer sensor is used (Fiber Bragg Grating or FBG) one or more sensors can be attached to the armor wires by gluing using, for instance, an adhesive such as epoxy resin. The sensors must be obviously fastened in a suitable manner to communicate with the equipment (302) capable of performing the readings from the strain variations which are measured by the sensors and, therefore, a connection (303) is provided between one or more sensors (301) and the reader (302) .. The sensors are advantageously fastened by the inspection window (104) of the topside fitting.

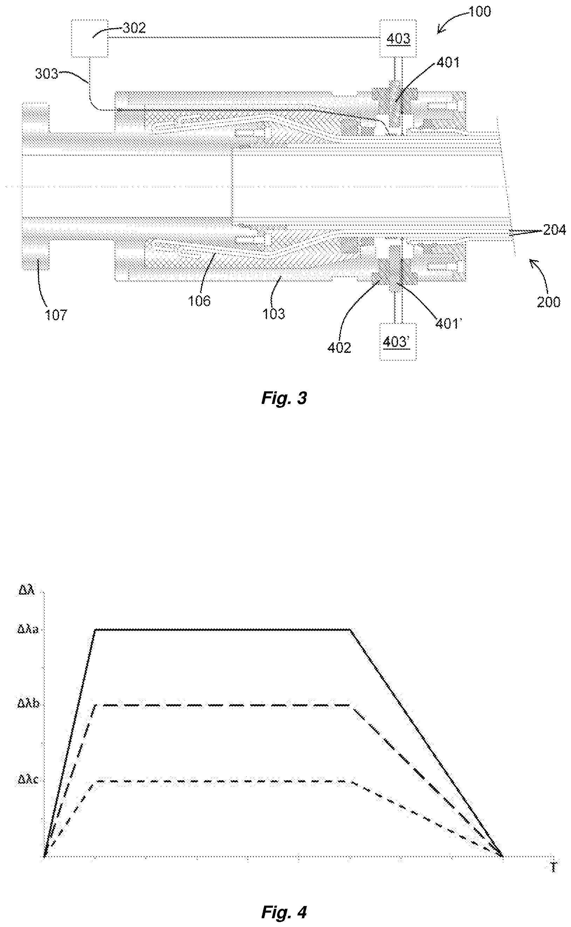

It follows the step of inducing in the sensor(s) attached to the wire(s) a temperature variation, which may consist of both a temperature increase and a temperature decrease if compared to the ambient temperature. A temperature increase can be performed, for instance, by using a hot air blower, an electrical resistance, induction, infrared, etc. Figure 3 is a schematic representation of the second step of the method according to the invention. A medium (401) is used as a heat source to induce a temperature increase in the sensors and, thus, in the traction armor wires. This medium can be, for instance, a hot air blower. A plug (402) or a similar device can be used to seal the inspection window (104) and prevent heat dissipation in the external environment. Accordingly, if the inspection window comprises a transparent protection (105) it could be necessary a prior step to remove the transparent protection before mounting the sensors. The medium to induce a temperature variation (401) can be associated with a temperature controller (403), such as a thermometer, in order to control the temperature inside of the inspection window and therefore in order to verify the time when the temperature attains a desired value. As it is obvious to persons skilled in the art, the temperature variation will also cause a variation in expansion of the sensors and of the wires where they are mounted, and this strain variation due to expansion can be measured by the sensors. Since the topside fitting can present more than one inspection window (104) more than one medium (104) as well as more than one plug (402) and more than one controller (403) can be obviously used to induce a temperature variation . Accordingly, it is possible to use both means to induce temperature variation associated with plugs and temperature controllers for as many inspection windows are available in the topside fitting.

In the following step involves a reading of at least one sensor and, in particular, of all the sensors attached to each strain armor wire, wherein the sensors are connected to the reader (302) which displays the variation measured by the sensors in order to detect, based on the performed reading (following step), a sensor(s) which may be improperly attached to the wire or a faulty sensor which would lead to misreadings and thus to a misinterpretation of nonexistent failures in the strain armor or even to the inability of detecting actual failures in the strain armor. This detection can be easily verified through readings which are inconsistent with the expected sensor readings based on induced temperature variation, and thus a corrective action can then be taken such as the replacement of a sensor or a new suitable fastening of the sensor.

The temperature variation can be determined by a person skilled in the art and, in particular, it must not exceed 80°C since the external polymeric layer (205) which is fastened adjacent to the positioning of the sensors in the topside fitting can be damaged. However, it is obvious that if the strain armor presents another set-up higher temperature can be used. Alternatively, a temperature decrease can be induced with the same aforementioned technical effects.

Furthermore, the method of the invention can be used when the pipeline is in operation mode, that is, when the flexible pipeline is pressurized and, therefore, there is no need to stop the production line to check the faulty sensors or those inappropriately mounted. This feature of the method of the invention ensures a better productivity since it prevents line stoppages. Moreover, the pipeline pressurization can cause sensors to unfasten due to the expansion produced by the pressure and the method allows to identify sensors which "unfasten" and to conduct corrective actions, even without stopping the production.

Alternatively, the method can be applied before pressurizing the pipeline, both before the pipeline assembly in the topside fitting and in the manufacturing facility itself, before performing the pressurization test to check the pipeline tightness, in order to prevent that in case corrective actions on the sensors are necessary they are identified before the assembly/pressuring which can be economically more advantageous since disassembling the pipeline to conduct such corrective actions can be avoided.

## EXAMPLE

The invention is described herein with respect to a practical example of the application of an embodiment of the aforementioned method only given for illustrative purposes without imposing any limitation other than that contained in the appended claims.

In the instant example optical extensometer sensors (Fiber Bragg Grating - FBG) are used, wherein the wavelength reflected by the sensor changes depending on strain and temperature according to the following equation:

$$\Delta\lambda / \lambda_0 = (a * \Delta T) + (b * \varepsilon) \qquad \text{(Eq. 1)}$$

wherein:

- $\lambda_0$ is the base wavelength at the beginning of the test, that is, the wavelength of the reflected wave when $\Delta T = 0$ and $\varepsilon = 0$;
- $\Delta\lambda$ is the change of wavelength which is a function of $\Delta T$ and $\varepsilon$;
- $\Delta T$ is the temperature difference; and
- $\varepsilon$ is the strain applied to the sensor, expressed in $\mu$m/m.

The constants a and b depend on the features of the optic fiber.

FBG sensors are frequently implemented the gradient index of optical fibers made of pure silica ($SiO_2$), similar to those used in long-range telecommunication applications. These fibers consist of a very small core, usually having a diameter of 4 to 9 $\mu$m, enclosed in pure silica having a diameter measuring up to 125 $\mu$m. The core exhibits a high refraction index due to a high Germanium doping. The difference of the refraction index of the core and of the coating causes the light to propagate only through the core. The fiber is also coated with acrylate, polyimide or carbon which protect it from the environment, especially from water and hydrogen which may cause hydrolysis or cracking.

These optical fibers are normally used to transmit light close to the infrared spectrum at a wavelength ranging from 1510 to 1625 nm and it allows a very low attenuation in this range, but they can also transmit light at wavelengths ranging from 1280 and 1330 nm, where attenuation can be higher.

In the framework of this exemplary embodiment of the invention, constant "a" depends on the optical-thermal coefficient of the optical fiber, which characterizes the way the core refraction index varies according to the temperature, and also on the thermal expansion coefficient of the optical fiber. Not only constant "b" depends on the mechanical features of the optical fiber but also on its optical-elastic coefficients which characterize the way the refraction index changes according to the strain. Typically, in the foregoing example of optical fiber constants "a" and "b" can present a value of:

- $a \approx 7.8 \times 10^{-6}$ °C$^{-1}$
- $b \approx 0.78 \times 10^{-6}$ m/μm

Taking a base wavelength of 1550 nm, $\lambda_0 = 1550$ and $\Delta\lambda = (a * \Delta T) \lambda_0 + (b * \varepsilon)\lambda_0$ resulting in:

$$\Delta\lambda \approx 0.012\Delta T + 0.0012\ \varepsilon \qquad \text{(Eq. 2)}$$

wherein $\Delta\lambda$ is expressed in nm and $\Delta T$ in °C.

The traction armor consists of wires made of steel, usually a high tensile strength steel, and as the persons skilled in the art can appreciate, the thermal expansion coefficient of steel is higher than the thermal expansion coefficient of silica, of which FBG sensors are made. The sensors are mounted on the strain armor wires, fastened by means of epoxy resin and connected to a computer associated with a software suitable to perform the reading of the measures taken by me sensors.

Therefore, the thermal expansion coefficient of steel $\alpha_a \approx 11*10^{-6}$ °C$^{-1}$ is much higher than the thermal expansion coefficient of glass//silica, $\alpha_s \approx 0.5810^{-6}$ °C$^{-1}$. Due to this difference of the thermal expansion coefficient of steel and that of glass/silica, it can be pointed out that the strain detected by the FBG sensors will be also different in the case of a sensor properly fastened to a strain armor wire and in that of a sensor improperly fastened to ta strain armor wire, since the latter will undergo a smaller expansion when heat is applied. Accordingly, we have that:

$$\varepsilon = (\alpha_a - \alpha_s) * \Delta T \qquad \text{(Eq. 3}$$

In foregoing equation 3, the ratio $\Delta L/L$ is given in m/m, and if a μm/m ratio is used we have that:

$$\varepsilon \text{ (in μm/m)} = (\alpha_a - \alpha_s) * 10^6 * \Delta T \implies \varepsilon \text{ (in μm/m)} \approx 10.5 * \Delta T \quad \text{(Eq. 4)}$$

Thus, by combining equations 2 and 4, we have that:

$$\Delta\lambda \approx 0.012\ \Delta T + (0.0012 * 10.5 * \Delta T) \approx 0.0246 * \Delta T \quad \text{(Eq. 5)}$$

Accordingly, if heat is applied to induce a temperature variation of 20°C, that is, $\Delta T \approx 20$°C, for example through a hot air blower, the expansion variation of the sensor associated with the expansion of the strain armor wire will be $\Delta\lambda$ = 0,49 nm. Figure 4 is a schematic graph representing an expected variation ($\Delta\lambda_b$) of a sensor properly fastened on the wire of a strain armor as a function of the time due to heat induction and, following stabilization, the cooling process back to ambient temperature. A similar graph can be read from the reader (302). The example of figure 4 mentions only a sensor mounted on a strain wire but, obviously, readings can be obtained for every sensor mounted on every strain armor wire.

If the sensor is "unfastened", that is, not fastened properly to the strain armor wire, it will not deform along with the wire and, as mentioned above, since silica exhibits a much lower thermal expansion coefficient than that of steel it will be easily found that the variation ($\Delta\lambda$) is lower than expected, such as represented in ($\Delta\lambda_c$) of the graph of figure 5.

Furthermore, the FBG sensor must be fastened by a proper medium such as an epoxy resin and the latter, in turn, exhibits a thermal expansion coefficient ($\alpha_e \approx 60*10^{-6}$ °C$^{-1}$) much higher than the thermal expansion coefficient of glass/silica of the sensor and also higher than the thermal expansion coefficient of steel and of the sensor. Therefore, if the sensor is fastened only to the epoxy resin and is not fastened to the strain armor wire, the reading of the variation ($\Delta\lambda$) will be higher than expected, such as shown in ($\Delta\lambda_a$) of the graph of figure 4 and, hence, it is also possible to detect the sensors which are not well fastened to the wire, but only to epoxy resin.

## Claims

1. A calibration method for a flexible pipeline (200), comprising at least one traction armor (204) layer wherein the traction armor (204) layer consists of one or more layers comprising at least one helicoidally-arranged metallic wire, wherein said flexible pipeline (200) is mounted on a topside fitting which comprises an inspection window (104), and the method comprising :

- fasten at least one sensor (301) to at least one traction armor wire;

**characterized by**:

- induce a temperature variation in said sensor (301) and in said at least one wire;
- carry out a reading of the strain variation undergone by the sensor (301) due to the temperature variation; and
- identify a potential failure based on the reading carried out.

2. The method, according to claim 1, **characterized in that** said sensor (301) is an optical extensometer sensor.

3. The method, according to claim 1, **characterized in that** the step of fastening comprises fastening a sensor (301) on each traction armor wire.

4. The method, according to claim 1, **characterized in that** the step of fastening comprises fastening said sensor (301) by means of an adhesive.

5. The method, according to claim 1, **characterized in that** the step of inducing a temperature variation involves an increase of temperature.

6. The method, according to claim 1, **characterized in that** the step of inducing a temperature variation involves a decrease of temperature;

7. The method, according to claim 1, **characterized in that** the step of inducing a temperature variation involves an increase of temperature and then a decrease of temperature back to ambient temperature.

8. The method, according to claim 1, **characterized in that** said temperature increase ranges between 10°C and 50° with respect to ambient temperature, in particular between 20°C and 40°C with respect to ambient temperature.

9. The method, according to claim 1, **characterized in that** said step of detecting a potential failure involves detecting a failure in the fastening of said sensor (301).

10. The method, according to claim 1, **characterized in that** said step of detecting a potential failure involves detecting a problem in the sensor (301) itself.

11. The method, according to claim 5 or 7, **characterized in that** said step of inducing a temperature variation involves the increase of temperature by using a hot air blower, electrical resistance, heat generated by induction or infrared.

12. The method, according to claim 1, **characterized in that** it is applied after the pressurization of the flexible pipeline (200).

13. The method, according to claim 1, **characterized in that** it is applied before the pressurization of the flexible pipeline (200).

14. The method, according to claim 1, **characterized in that** it also involves the step of applying a corrective action to solve a detected potential failure.


**Patentansprüche**

1. Kalibrierverfahren für eine flexible Rohrleitung (200), die mindestens eine Zugbewehrungsschicht (204) umfasst, wobei die Zugbewehrungsschicht (204) aus einer oder mehreren Schichten besteht, die mindestens einen schraubenförmig angeordneten Metalldraht umfasst bzw. umfassen, wobei die flexible Rohrleitung (200) an einer oberseitigen Ausstattung montiert ist, die ein Kontrollfenster (104) umfasst, wobei das Verfahren folgenden Schritt umfasst:

- Befestigen mindestens eines Sensors (301) an mindestens einem Zugbewehrungsdraht;

**gekennzeichnet durch**:

- Herbeiführen einer Temperaturvariation in dem Sensor (301) und in dem mindestens einen Draht;
- Durchführen einer Ablesung der Dehnungsvariation, die der Sensor (301) auf Grund der Temperaturvariation erfährt; und
- Identifizieren eines möglichen Versagens basierend auf der durchgeführten Ablesung.

2. Verfahren nach Anspruch 1, **dadurch gekennzeichnet, dass** der Sensor (301) ein optischer Dehnungsmesssensor ist.

3. Verfahren nach Anspruch 1, **dadurch gekennzeichnet, dass** der Schritt des Befestigens das Befestigen eines Sensors (301) an jedem Zugbewehrungsdraht umfasst.

4. Verfahren nach Anspruch 1, **dadurch gekennzeichnet, dass** der Schritt des Befestigens das Befestigen eines Sensors (301) anhand eines Klebemittels umfasst.

5. Verfahren nach Anspruch 1, **dadurch gekennzeichnet, dass** der Schritt des Herbeiführens einer Temperaturvariation einen Temperaturanstieg umfasst.

6. Verfahren nach Anspruch 1, **dadurch gekennzeichnet, dass** der Schritt des Herbeiführens einer Temperaturvariation einen Temperaturabfall umfasst.

7. Verfahren nach Anspruch 1, **dadurch gekennzeichnet, dass** der Schritt des Herbeiführens einer Temperaturvariation einen Temperaturanstieg und dann einen Temperaturabfall zurück auf die Umgebungstemperatur umfasst.

8. Verfahren nach Anspruch 1, **dadurch gekennzeichnet, dass** der Temperaturanstieg zwischen 10 °C und 50° im Verhältnis zur Umgebungstemperatur, insbesondere zwischen 20 °C und 40 °C im Verhältnis zur Umgebungstemperatur liegt.

9. Verfahren nach Anspruch 1, **dadurch gekennzeichnet, dass** der Schritt des Detektierens eines möglichen Versagens das Detektieren eines Versagens der Befestigung des Sensors (301) umfasst.

10. Verfahren nach Anspruch 1, **dadurch gekennzeichnet, dass** der Schritt des Detektierens eines möglichen Versagens das Detektieren eines Problems in dem Sensor (301) selber umfasst.

11. Verfahren nach Anspruch 5 oder 7, **dadurch gekennzeichnet, dass** der Schritt des Herbeiführens einer Temperaturvariation den Temperaturanstieg unter Verwendung eines Heißluftgebläses, eines elektrischen Widerstands, von Hitze, die durch Induktion oder Infrarot erzeugt wird, umfasst.

12. Verfahren nach Anspruch 1, **dadurch gekennzeichnet, dass** es nach der Druckbeaufschlagung der flexiblen Rohrleitung (200) angewendet wird.

13. Verfahren nach Anspruch 1, **dadurch gekennzeichnet, dass** es vor der Druckbeaufschlagung der flexiblen Rohrleitung (200) angewendet wird.

14. Verfahren nach Anspruch 1, **dadurch gekennzeichnet, dass** es auch den Schritt des Anwendens einer Korrekturmaßnahme umfasst, um ein detektiertes mögliches Versagen zu beheben.

**Revendications**

1. Procédé d'étalonnage pour une canalisation flexible (200), comprenant au moins une couche d'armature de traction (204) dans laquelle la couche d'armature de traction (204) est constituée d'une ou plusieurs couches comprenant au moins un fil métallique agencé de façon hélicoïdale, dans lequel ladite canalisation flexible (200) est montée sur un raccord supérieur qui comprend une fenêtre d'inspection (104), et le procédé comprenant :

- la fixation d'au moins un capteur (301) à au moins un fil d'armature de traction ;

**caractérisé en ce que** :

- on provoque une variation de température dans ledit capteur (301) et dans ledit au moins un fil ;
- on effectue une lecture de la variation de contrainte subie par le capteur (301) due à la variation de température ; et
- on identifie une défaillance potentielle sur la base de la lecture effectuée.

2. Procédé, selon la revendication 1, **caractérisé en ce que** ledit capteur (301) est un capteur à extensomètre optique.

3. Procédé, selon la revendication 1, **caractérisé en ce que** l'étape de fixation comprend la fixation d'un capteur (301) sur chaque fil d'armature de traction.

4. Procédé, selon la revendication 1, **caractérisé en ce que** l'étape de fixation comprend la fixation dudit capteur (301) au moyen d'un adhésif.

5. Procédé, selon la revendication 1, **caractérisé en ce que** l'étape d'induction d'une variation de température met en oeuvre une augmentation de température.

6. Procédé, selon la revendication 1, **caractérisé en ce que** l'étape d'induction d'une variation de température met en oeuvre une diminution de température.

7. Procédé, selon la revendication 1, **caractérisé en ce que** l'étape d'induction d'une variation de température met en oeuvre une augmentation de température, puis une diminution de température jusqu'au retour à la température ambiante.

8. Procédé, selon la revendication 1, **caractérisé en ce que** ladite augmentation de température est dans la plage comprise entre 10 °C et 50 °C par rapport à la température ambiante, en particulier entre 20 °C et 40 °C par rapport à la température ambiante.

9. Procédé, selon la revendication 1, **caractérisé en ce que** ladite étape de détection d'une défaillance potentielle met en oeuvre la détection d'une défaillance dans la fixation dudit capteur (301).

10. Procédé, selon la revendication 1, **caractérisé en ce que** ladite étape de détection d'une défaillance potentielle met en oeuvre la détection d'un problème dans le capteur (301) lui-même.

11. Procédé, selon la revendication 5 ou 7, **caractérisé en ce que** ladite étape d'induction d'une variation de température met en oeuvre l'augmentation de température au moyen d'une soufflante d'air chaud, d'une résistance électrique, de chaleur générée par induction ou infrarouge.

12. Procédé, selon la revendication 1, **caractérisé en ce qu'**il est appliqué après la mise sous pression de la canalisation flexible (200).

13. Procédé, selon la revendication 1, **caractérisé en ce qu'**il est appliqué avant la mise sous pression de la canalisation flexible (200).

14. Procédé selon la revendication 1, **caractérisé en ce qu'**il met en oeuvre en outre l'étape d'une application d'une action corrective pour résoudre une défaillance potentielle détectée.

**Fig. 1**

**Fig. 2**

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2489824 A

- BR PI08010110

**Non-patent literature cited in the description**

- **MORIKAWA et al.** New Advances In Flexible Riser Monitoring Techniques Using Optical Fiber Sensors. *XXXI International Conference on Ocean Offshore and Arctic Engineering,* 01 July 2012